# EUROPÄISCHE PATENTSCHRIFT

(11) **EP 0 753 390 B1**
(45) Veröffentlichungstag und Bekanntmachung des Hinweises auf die Patenterteilung: **05.01.2000**
(21) Anmeldenummer: 96110639.0
(22) Anmeldetag: 02.07.1996
(51) Int. Cl.: B29C 45/17, B29C 45/33

(54) **Spritzgiesswerkzeug zur Herstellung eines aus Kunststoff bestehenden Kastens**
Injection mould for producing a plastic crate
Moule d'injection pour fabriquer un casier en matière plastique

(30) Priorität: 08.07.1995 DE 19525000
(43) Veröffentlichungstag der Anmeldung: 15.01.1997
(73) Patentinhaber: FRIEDRICH THEYSOHN GmbH, D-30853 Langenhagen (DE)
(72) Erfinder: Kelpe, Hans-Rudolf, 31249 Hohenhameln (DE); Lange, Horst, 31535 Neustadt (DE); Pichler, Ernst, 30419 Hannover (DE)
(74) Vertreter: Döring, Roger, Dipl.-Ing.

(56) Entgegenhaltungen:
- DE-A- 4 217 343
- DE-U- 9 006 785
- PATENT ABSTRACTS OF JAPAN vol. 18, no. 154 (M-1577), 15.März 1994 & JP-A-05 329893 (SEKISUI CHEM CO LTD), 14.Dezember 1993,

## Beschreibung

Die Erfindung bezieht sich auf ein Spritzgießwerkzeug zur Herstellung eines aus Kunststoff bestehenden Kastens, der einen Boden und vier rechtwinklig von demselben abstehende, zusammenhängende Wände aufweist und bei dem mindestens eine der Wände an ihrem dem Boden abgewandten Ende eine durch eine Durchbrechung derselben gebildete Griffleiste hat, die unter Einschluß eines Hohlraums doppelwandig ausgebildet ist, bestehend aus einem Werkzeug mit einem feststehenden Düsenteil und einem beweglichen Schließteil, zwischen denen bei geschlossenem Werkzeug ein Formhohlraum eingeschlossen ist, bei welchem am beweglichen Schließteil des Werkzeugs ein in Richtung des Düsenteils weisender, den Formhohlraum innen begrenzender Kern angebracht ist, bei welchem am Düsenteil vier jeweils um 90° gegeneinander versetzte Grundbacken befestigt sind, die in Richtung des Schließteils weisen und den Kern von außen mit Abstand umgeben und deren dem Kern zugewandte Innenflächen derart schräg verlaufen, daß ihr Abstand vom Kern mit zunehmender Entfernung vom Düsenteil zunimmt, bei welchem an den schrägen, mit Führungen versehenen Innenflächen der Grundbacken bewegliche, in den Führungen geführte Formbacken angebracht sind, die bei geschlossenem Werbeug den Formhohlraum von außen begrenzen und zur Erzeugung einer Durchbrechung in der entsprechenden Wand des Kastens einen in den Formhohlraum hineinragenden, am Kern anliegenden Vorsprung haben, und bei welchem pro zu erzeugender Griffleiste in der entsprechenden Formbacke ein im rechten Winkel zur Achse des Werkzeugs relativ zur Formbacke verstellbarer Backenschieber angeordnet ist, der mit Steuer- und Bewegungselementen ausgerüstet ist, durch welche er beim Entformen des Kastens erst bei vom Werkzeug gelöstem Kasten bewegbar ist (DE-PS 24 40 900).

Ein derartiger Kasten ist beispielsweise ein Flaschenkasten. Es kann sich aber auch um einen Kasten zur Aufnahme und zum Transport anderer Güter handeln, beispielsweise um einen Obst- und Gemüsekasten. Ein voll beladener Kasten hat ein erhebliches Gewicht, so daß die aus Gewichtsgründen meist materialarmen und an der Unterkante eckigen Griffleisten in die Hände von den Kasten tragenden Personen einschneiden. Das gilt insbesondere für vollständig mit gefüllten Flaschen bestückte Kästen, die oft mit nur einer Hand getragen werden.

Dieser Mangel von bekannten, auf dem Markt im Einsatz befindlichen Kästen soll bei dem aus der EP 0 260 698 A1 bekannten Kasten dadurch vermieden werden, daß an den Griffleisten desselben innen eine Vielzahl von dicht liegenden Lamellen angebracht wird. Da die Lamellen verhindern, daß die Finger einer den Kasten tragenden Person weit um den Griffand herumfassen können, ergibt sich insgesamt eine verbesserte Griffläche. Es bleibt aber gerade im Übergangsbereich vom parallel zum Boden des Kastens im Griffbereich verlaufenden Rand desselben zu den Lamellen eine relativ scharfe Kante, auch wenn der Rand gewölbt ist. Diese Kante schneidet nach wie vor besonders dann in die Hand einer den Kasten tragenden Person ein, wenn der Kasten in Schräglage nur mit einer Hand getragen wird. Die relativ langen Lamellen bedeuten für diesen bekannten Kasten außerdem einen nicht unerheblichen zusätzlichen Materialaufwand.

Mit dem aus der DE-PS 38 23 650 bekannten Verfahren wird an der Unterkante des Griffbereichs eines Kastens, an dem die Hand einer denselben tragenden Person anliegt, eine Verdickung mit kreisförmigem Querschnitt angebracht. Die Verdickung weist einen durch Gasinjektion hergestellten Hohlraum auf, so daß ihre Wanddicke etwa derjenigen der Wände des Kastens entspricht. Dieser Kasten hat sich in der Praxis gewährt. Er ist wegen der runden Verdickung auch in gefülltem Zustand angenehm zu tragen.

Die DE-OS 42 17 343 beschreibt eine Spritzgießform zur Herstellung von Kästen aus Kunststoff, die einen Handgriff mit einer handfreundlichen Profilierung aufweisen. Der Handgriff hat beispielsweise einen kreisförmig gebogenen Rand. Zur beschädigungsfreien Ausformung dieser Profilierung ist in einer den Formhohlraum der Spritzgießform außen begrenzenden Formbacke eine leicht bewegliche Schieberplatte angeordnet. Eine Stirnfläche der Schieberplatte ist entsprechend der gewünschten Profilierung des Handgriffs geformt. Sie begrenzt den Formhohlraum während des Spritzvorgangs zur Herstellung des Kastens.

Aus der DE-U-90 06 785 geht ein Kunststoffkasten mit mindestens einem hohl ausgeführten Griff hervor. Der hohle Griff wird dadurch erzeugt, daß der für die Herstellung des Kastens bestimmte Werkstoff von zwei Seiten in einen für den Griff vorgesehenen Formhohlraumteil eingebracht wird. Ein unter Druck stehendes Gas wird an der Stelle eingespritzt, an der die beiden Werkstoffströme im Formhohlraumteil verschmelzen.

Das "Abstract" der JP-A-OS-329893 zeigt ein Spritzwerkzeug zur Herstellung von Formkörpern mit nach außen abstehenden Stegen. Zur Entformung der Formkörper sind zwei korrespondierende, unter Federeinwirkung stehende Schieber vorgesehen, durch welche der Teil des Spritzwerkzeugs parallel zur Richtung der Stege verschoben werden kann, in dem Hohlräume zur Bildung derselben angebracht sind.

Mit dem Spritzgießwerkzeug nach der eingangs erwähnten DE-PS 24 40 900 werden Kästen hergestellt, deren Griffleisten U-förmig ausgebildet und nach unten offen sind. Der Kasten und die Griffleisten sind stabil. Sie haben jedoch an ihrer Unterkante, an der beim Tragen des Kastens die Hand der denselben tragenden Person anliegt, wieder eckige Kanten, die in die Hand einschneiden können.

Der Erfindung liegt die Aufgabe zugrunde, das eingangs beschriebene Spritzgießwerkzeug so zu gestalten, daß die Griffleisten eines mit derselben hergestellten Kastens nicht in die Hand von denselben tragenden Personen einschneiden können.

Diese Aufgabe wird gemäß der Erfindung dadurch gelöst,
- daß im Kern in Höhe jeder zu erzeugenden Griffleiste ein Unterflurschieber angebracht ist, der rechtwinklig zur Schließbewegung des Spritzgießwerkzeugs verstellbar ist, und während des Spritzgießens mit seiner Stirnfläche in den zur Bildung der Griffleiste vorgesehenen Teil des Formhohlraums hineinragt,
- daß im Werkzeug pro zu erzeugender Griffleiste eine Düse zum Eindrücken von Gas in das Spritzmaterial vorhanden ist, welches sich in dem für die Griffleiste vorgesehenen Teil des Formhohlraums befindet, und
- daß der bei geschlossenem Spritzgießwerkzeug als Teil des Vorsprungs der entsprechenden Formbacke am Kern anliegende Backenschieber mit einer kreisbogenförmig gestalteten Mulde zur Formung der Unterkante der Griffleiste ausgerüstet ist, der beim Entformen des Kastens zunächst bei in Entformungsrichtung und gleichzeitig nach außen bewegter Formbacke weiter am Kern anliegt und erst nachdem die Griffleiste aus der Mulde ausgetreten ist, axial nach außen in seine Arbeitsposition in der Formbacke rückstellbar ist.

Mit diesem Spritzgießwerkzeug können Kästen aus Kunststoff gespritzt werden, deren Griffleisten eine absatzfrei gerundete Unterkante haben. Die Griffleiste kann dadurch nicht mehr in die Hand einer einen solchen Kasten tragenden Person einschneiden. Die Griffleiste liegt vielmehr wegen der runden Unterkante angenehm in der Hand. Sie ist durch die doppelwandige Ausführung mit dem durch Gasinjektion erzeugten, vollständig umschlossenen Hohlraum sehr stabil. Der Kasten kann somit auch voll beladen problemlos getragen werden. Das Spritzgießwerkzeug zur Herstellung des Kastens kann in seinem wesentlichen Aufbau unverändert bleiben. Es muß einerseits lediglich im feststehenden Kern pro Griffleiste ein Unterflurschieber angeordnet werden. Auf der anderen Seite ist pro Griffleiste in den beweglichen Formbacken ein Backenschieber anzubringen, der gleichzeitig zur Zuführung des Gases über eine Düse dienen kann, mit welchem der Hohlraum der jeweiligen Griffleiste erzeugt wird.

Ein Ausführungsbeispiel des Erfindungsgegenstandes ist in den Zeichnungen dargestellt.

Es zeigen:
Fig. 1 eine perspektivische Ansicht eines mit dem Spritzgießwerkzeug nach der Erfindung herstellbaren Kastens.
Fig. 2 einen Schnitt durch Fig. 1 längs der Linie II - II in vergrößerter Darstellung.
Fig. 3 einen Schnitt durch das Spritzgießwerkzeug in geschlossener Arbeitsstellung.
Fig. 4 eine Draufsicht auf den Düsenteil des Spritzgießwerkzeugs.
Fig. 5 eine Einzelheit des Spritzgießwerkzeugs in Arbeitsstellung in vergrößerter Darstellung.
Fig. 6 und 7 die Einzelheit nach Fig. 5 in zwei unterschiedlichen Zwischenstellungen nach dem Öffnen des Spritzgießwerkzeugs.

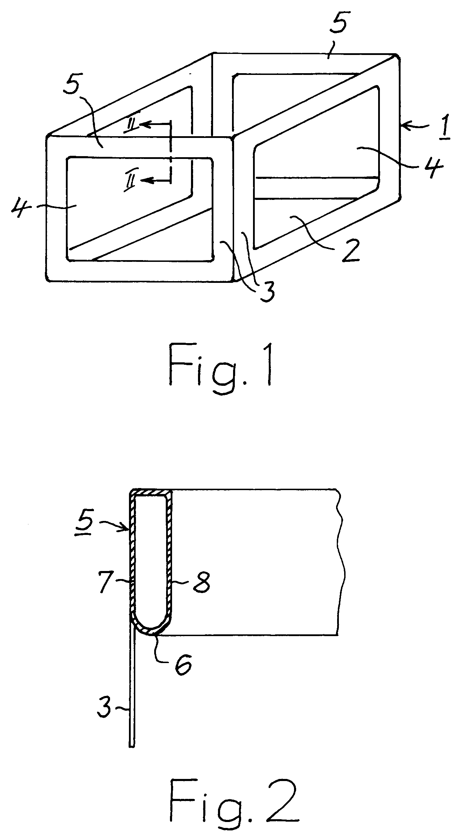

Der in Fig. 1 dargestellte Kasten 1 aus Kunststoff ist durch Spritzgießen hergestellt. Er weist einen beliebig gestalteten Boden 2 und Wände 3 auf, die rechtwinklig von demselben abstehen und untereinander verbunden sind. Gefache und andere gegebenenfalls vorhandene Aufbauten des Bodens 2 sind der Einfachheit halber nicht mit eingezeichnet. In mindestens einer der Wände 3 ist eine Durchbrechung 4 angebracht, durch welche am oberen, dem Boden 2 abgewandten Rand des Kastens 1 eine Griffleiste 5 zum Tragen des Kastens 1 gebildet ist. Im dargestellten Ausführungsbeispiel haben alle vier Wände 3 des Kastens 1 eine Durchbrechung 4. Die Griffleiste 5 hat gemäß Fig. 2 eine abgerundete Unterkante 6. Sie ist hohl ausgeführt. Dadurch hat die Griffleiste 5 zwei Teilwände 7 und 8, die einen Hohlraum begrenzen. Der Hohlraum erstreckt sich über die gesamte Länge und Höhe der Griffleiste 5. Durch die insgesamt hohle Ausführung hat die Griffleiste 5 die Wirkung eines Rohres. Sie ist insbesondere gegenüber Biegebeanspruchungen stabilisiert.

Das Spritzgießwerkzeug zum Herstellen eines Kastens 1 - im folgenden kurz "Werkzeug" genannt - besteht aus einem im Normalfall feststehenden Düsenteil 9 und einem in Richtung des Doppelpfeils 10 bewegbaren Schließteil 11. Grundsätzlich könnten auch der Düsenteil 9 beweglich und der Schließteil 11 feststehend ausgeführt sein. Zwischen Düsenteil 9 und Schließteil 11 liegt ein Formhohlraum 12, der den Abmessungen und der Gestaltung eines herzustellenden Kastens 1 entspricht. Der Düsenteil 9 weist eine Bodenplatte 13 auf, die in Arbeitsposition bei geschlossenem Werkzeug am Boden 2 des zu erzeugenden Kastens 1 liegt.

Zum Schließteil 11 des Werkzeugs gehört ein Kern 14, der bei geschlossenem Werkzeug den Formhohlraum 12 von innen begrenzt. Der Düsenteil 9, über den das Spritzmaterial dem Formhohlraum 12 zugeführt wird, hat vier jeweils um 90° gegeneinander versetzte Grundbacken 15. Sie sind fest mit dem Düsenteil 9 verbunden und umgeben den Kern 14 mit Abstand rundum. Die dem Kern 14 zugewandten Innenflächen der Grundbacken 15 verlaufen derart schräg, daß ihr Abstand zum Kern 14 mit zunehmender Entfernung vom Düsenteil 9 zunimmt.

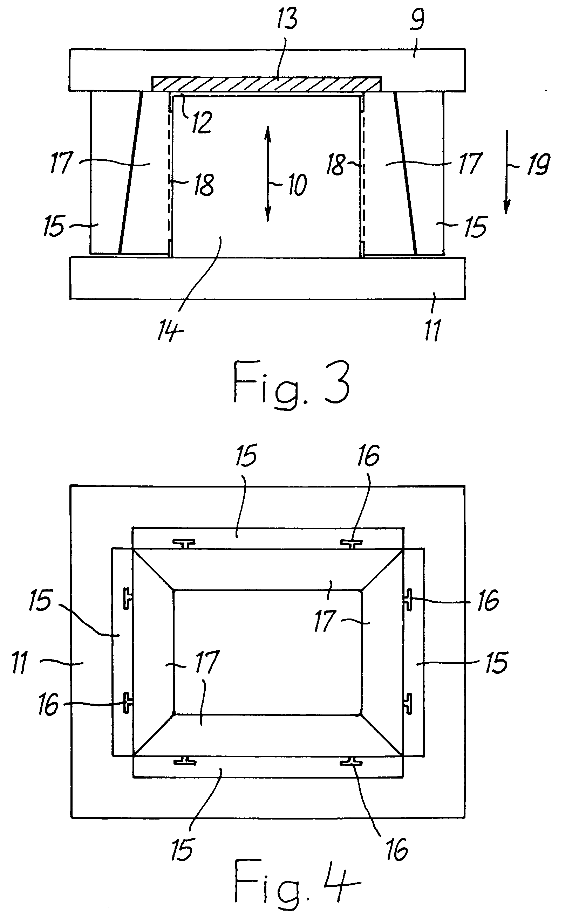

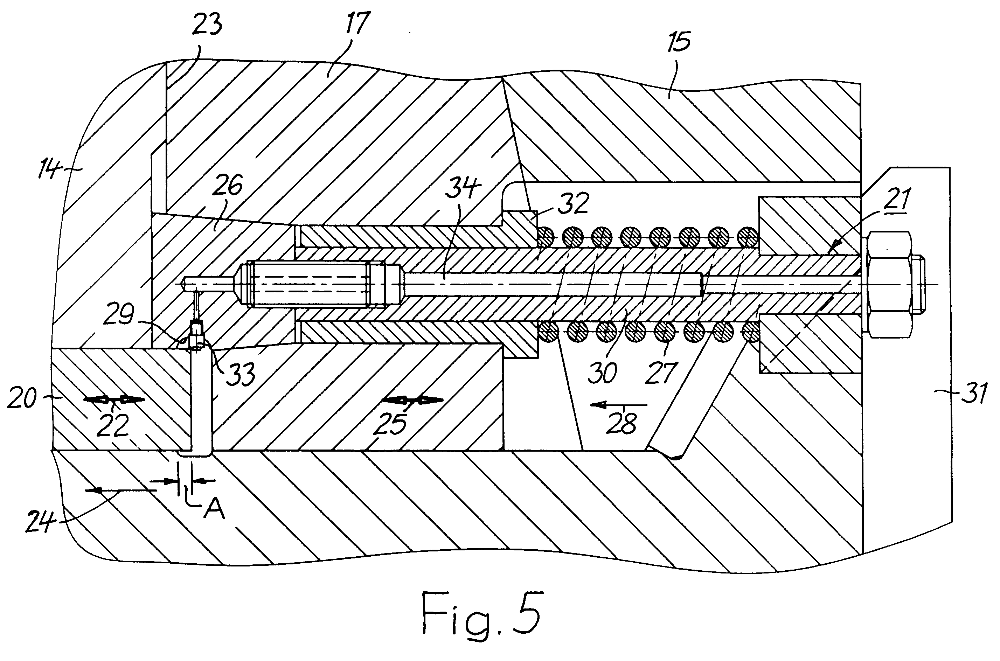

An den Innenflächen der Grundbacken 15 sind Führungen 16 angebracht, die entsprechend Fig. 4 beispielsweise T-förmig ausgebildet sein können. In den Führungen 16 sind Formbacken 17 geführt, die beispielsweise hydraulisch in Richtung des Doppelpfeils 10 verschiebbar sind. In der in Fig. 3 dargestellten Schließstellung des Werkzeugs begrenzen die Formbacken 17 den Formhohlraum 12 von außen. Sie haben jeweils einen Vorsprung 18, der in der Arbeitsposition am Kern 14 anliegt. Die Vorsprünge 18 unterbrechen somit den Formhohlraum 12. Sie dienen zur Herstellung der Durchbrechungen 4 in den Wänden 3 des Kastens 1.

In der in Fig. 3 dargestellten Schließstellung des Werkzeugs wird durch Füllung des Formhohlraums 12 ein Kasten 1 gespritzt. Sobald das Spritzmaterial ausreichend fest geworden ist, wird das Werkzeug geöffnet. Dazu werden der Schließteil 11 mit dem Kern 14 und gleichzeitig die Formbacken 17 in Richtung des Pfeiles 19 bewegt. Da die Formbacken 17 bei dieser Bewegung gleichzeitig nach außen bewegt werden, kommen deren Vorsprünge 18 von den Wänden 3 des Kastens 1 frei. Der fertige Kasten 1 kann dann aus dem Werkzeug entnommen werden.

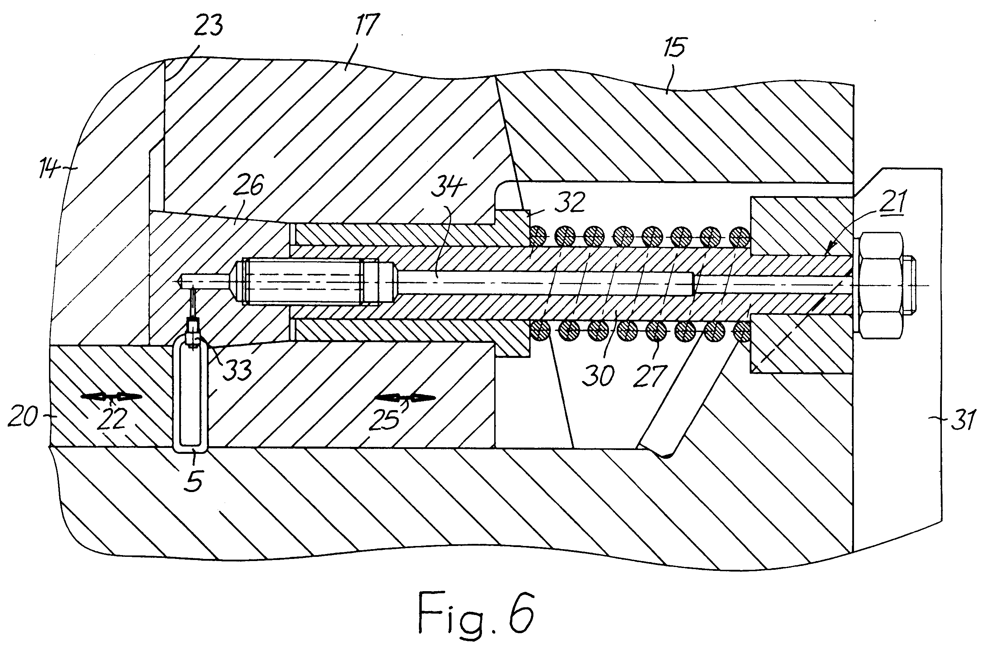

Zur Formung einer speziell gestalteten, aus Fig. 2 im Querschnitt ersichtlichen Griffleiste 5 sind gemäß den Fig. 5 bis 7 im Kern 14 ein Unterflurschieber 20 und in der korrespondierenden Formbacke 17 ein Backenschieber 21 angeordnet. Der Unterflurschieber 20 ist beispielsweise hydraulisch um die Strecke A in Richtung des Doppelpfeils 22 verschiebbar. Er ragt in der aus Fig. 5 ersichtlichen Arbeitsposition in den für die Griffleiste 5 vorgesehenen Teil des Formhohlraums 12 hinein, also über die zugehörige Kante 23 des Kerns 14 hinaus. Zur Erzeugung der hohlen Griffleiste 5 wird der Unterflurschieber 20 um die Strecke A in Richtung des Pfeiles 24 bewegt. Er nimmt dann die aus Fig. 6 ersichtliche Position ein.

Der Backenschieber 21 ist in der Formbacke 17 in Richtung des Doppelpfeiles 25 beweglich gelagert. In der aus Fig. 5 ersichtlichen Schließstellung des Werkzeugs ist der Backenschieber 21 Teil des Vorsprungs 18 der Formbacke 17. Er liegt dann mit der Stirnfläche seiner nach außen konisch erweiterten Spitze 26 am Kern 14 an Zum Backenschieber 21 gehört auch eine Feder 27, durch welche die Spitze 26 ständig in Richtung des Pfeiles 28 gedrückt wird, also in ihre aus Fig. 5 ersichtliche Arbeitsposition. Statt der Feder 27 könnte auch eine in gleicher Weise wirkende Pneumatik oder auch eine Hydraulik eingesetzt werden. Die Formbacke 17 hat eine konisch aufgeweitete Durchbrechung zur Aufnahme der konisch ausgeführten Spitze 26 des Backenschiebers 21. In der Spitze 26 des Backenschiebers 21 ist über deren ganze Länge eine kreisbogenförmig gestaltete Mulde 29 zur Formung der runden Unterkante 6 der Griffleiste 5 angebracht.

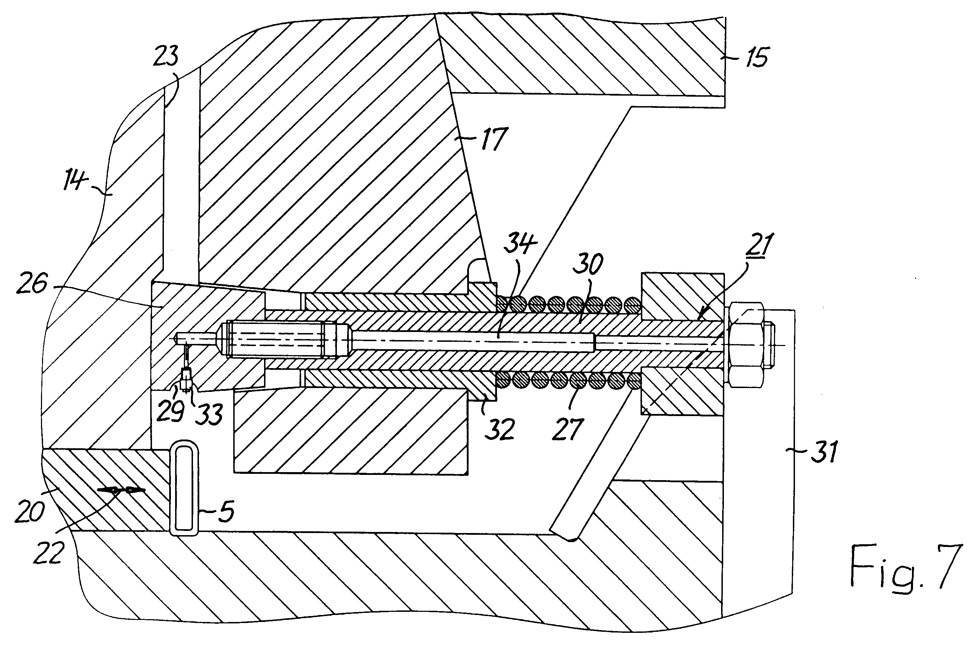

Bei der Entformung des Kastens 1 werden der Kern 14 und die Formbacke 17 - wie bereits bei Fig. 3 erwähnt - in Richtung des Pfeiles 19 bewegt. Die gleichzeitig nach außen gerichtete Bewegung der Formbacke 17 macht der Backenschieber 21 nicht mit, da er mit seinem Kern 30, der von der Feder 27 umschlossen ist, an einem Anschlag 31 anliegt und an demselben entlang gleitet. Dabei wird die Feder 27 durch den Druckkörper 32 zusammengedrückt. Die Spitze 26 des Backenschiebers 21 liegt also weiter fest am Kern 14 an. Erst wenn der Vorsprung 18 der Formbacke 17 vollständig von der entsprechenden Wand des Kastens 1 frei gekommen ist, wird der Weg der Formbacke 17 und damit der Weg des Backenschiebers 21 in Richtung des Pfeiles 19 begrenzt. Die Griffleiste 5 des Kastens 1 tritt dann aus der Mulde 30 aus. Sie hat eine der Form der Mulde 30 entsprechende, wohlgerundete Unterkante 6. Diese Endposition des Werkzeugs geht aus Fig. 7 hervor.

Die Griffleiste 5 wird entsprechend Fig. 2 hohl ausgeführt. Dazu wird nach dem Einbringen des Spritzmaterials in den Formhohlraum 12 des Werkzeugs Gas unter Druck in den für die Griffleiste vorgesehenen Teil des Formhohlraums 12 injiziert. Das kann mittels einer Düse 33 erfolgen, die einschließlich Zuleitung 34 im Backenschieber 21 angeordnet ist. Während der Gaszuführ wird der Unterflurschieber 20 in Richtung des Pfeiles 24 in seine aus Fig. 6 ersichtliche Endstellung bewegt.

Anordnung und Wirkungsweise von Unterflurschieber 20 und Backenschieber 21 gelten unverändert für jede Wand 3 des Kastens 1, die durch Ausformung einer Durchbrechung 4 mit einer Griffleiste 5 versehen werden soll. Die Düse 33 mit Zuleitung 34 könnte auch an einer anderen Stelle des Werkzeugs angebracht sein, solange sie an der für die Griffleiste 5 vorgesehenen Stelle in den Formhohlraum 12 mündet. Als Gas zur Bildung einer hohlen Griffleiste 5 kann beispielsweise Stickstoff verwendet werden. Das Gas wird beispielsweise mit einem Druck von 50 bis 80 Bar in das Spritzmaterial eingepreßt.

## Patentansprüche

1. Spritzgießwerkzeug zur Herstellung eines aus Kunststoff bestehenden Kastens (1), der einen Boden (2) und vier rechtwinklig von demselben abstehende, zusammenhängende Wände (3) aufweist und bei dem mindestens eine der Wände an ihrem dem Boden abgewandten Ende eine durch eine Durchbrechung (4) derselben gebildete Griffleiste (5) hat, die unter Einschluß eines Hohlraums doppelwandig ausgebildet ist, bestehend aus einem Werkzeug mit einem feststehenden Düsenteil (9) und einem beweglichen Schließteil (11), zwischen denen bei geschlossenem Werkzeug ein Formhohlraum (12) eingeschlossen ist, bei welchem am beweglichen Schließteil (11) des Werkzeugs ein in Richtung des Düsenteils (9) weisender, den Formhohlraum (12) innen begrenzender Kern (14) angebracht ist, bei welchem am Düsenteil (9) vier jeweils um 90° gegeneinander versetzte Grundbacken (15) befestigt sind, die in Richtung des Schließteils (11) weisen und den Kern (14) von außen mit Abstand umgeben und deren dem Kern (14) zugewandte Innenflächen derart schräg verlaufen, daß ihr Abstand vom Kern (14) mit zunehmender Entfernung vom Düsenteil (9) zunimmt, bei welchem an den schrägen, mit Führungen (16) versehenen Innenflächen der Grundbacken (15) bewegliche, in den Führungen (16) geführte Formbacken (17) angebracht sind, die bei geschlossenem Werkzeug den Formhohlraum (12) von außen begrenzen und zur Erzeugung einer Durchbrechung (4) in der entsprechenden Wand (3) des Kastens (1) einen in den Formhohlraum (12) hineinragenden, am Kern (14) anliegenden Vorsprung (18) haben, und bei welchem pro zu erzeugender Griffleiste (5) in der entsprechenden Formbacke (17) ein im rechten Winkel zur Achse des Werkzeugs relativ zur Formbacke (17) verstellbarer Backenschieber (21) angeordnet ist, der mit Steuer- und Bewegungselementen ausgerüstet ist, durch welche er beim Entformen des Kastens (1) erst bei vom Werkzeug gelöstem Kasten (1) bewegbar ist, dadurch gekennzeichnet,
- daß im Kern (14) in Höhe jeder zu erzeugenden Griffleiste (5) ein Unterflurschieber (20) angebracht ist, der rechtwinklig zur Schließbewegung des Spritzgießwerkzeugs verstellbar ist, und während des Spritzgießens mit seiner Stirnfläche in den zur Bildung der Griffleiste (5) vorgesehenen Teil des Formhohlraums (12) hineinragt,
- daß im Werkzeug pro zu erzeugender Griffleiste (5) eine Düse (33) zum Eindrücken von Gas in das Spritzmaterial vorhanden ist, welches sich in dem für die Griffleiste (5) vorgesehenen Teil des Formhohlraums (12) befinde, und
- daß der bei geschlossenem Spritzgießwerkzeug als Teil des Vorsprungs (18) der entsprechenden Formbacke (17) am Kern (14) anliegende Backenschieber (21) mit einer kreisbogenförmig gestalteten Mulde (29) zur Formung der Unterkante (6) der Griffleiste (5) ausgerüstet ist, der beim Entformen des Kastens (1) zunächst bei in Entformungsrichtung und gleichzeitig nach außen bewegter Formbacke (17) weiter am Kern (14) anliegt und erst nachdem die Griffleiste (5) aus der Mulde (29) ausgetreten ist, axial nach außen in seine Arbeitsposition in der Formbacke (17) rückstellbar ist.

2. Spritzgießwerkzeug nach Anspruch 1, dadurch gekennzeichnet, daß die Düse (33) zum Eindrücken des Gases einschließlich Zuleitung (34) jeweils in dem Backenschieber (21) angeordnet ist.

## Claims

1. Injection mould for the manufacture of a plastics box (1) which has a base (2) and four connecting walls (3) projecting at right-angles from the said base and in which at least one of the walls has at its end facing away from the base a grip moulding (5) which is formed by an opening (4) in the said wall(s) and which, enclosing a cavity, is of double-walled configuration, the said injection mould comprising a mould having a fixed nozzle pad (9) and a movable closing part (11), between which, when the mould is closed, a die cavity (12) is enclosed, wherein to the movable closing part (11) of the mould there is fitted a core (14), which points in the direction of the nozzle part (9) and internally delimits the die cavity (12), wherein to the nozzle part (9) there are attached four primary jaws (15), which are mutually offset by 90° respectively and which point in the direction of the closing part (11) and surround the core (14) from outside at a distance and the inner faces of which facing the core (14) follow an oblique course such that their distance from the core (14) increases with increasing remoteness from the nozzle part (9), wherein to the oblique inner faces of the primary jaws (15), which inner faces are provided with guides (16), there are fitted movable die jaws (17), which are guided in the guides (16) and which, when the mould is closed, delimit the die cavity (12) from outside and, in order to produce an opening (4) in the corresponding wall (3) of the box (1), have a projection (18) which juts into the die cavity (12) and bears against the core (14), and wherein for each grip moulding (5) which is to be produced a jaw slide (21), which is adjustable at right-angles to the axis of the mould relative to the die jaw (17), is disposed in the corresponding die jaw (17), the said jaw slide being equipped with control and motional elements by which it, upon removal of the box (1) from the mould, can only be moved once the box (1) is freed from the mould, characterised
- in that in the core (14), at the level of each grip moulding (5) which is to be produced, an underfloor slide (20) is fitted, which is adjustable at right-angles to the closing motion of the injection mould and during the injection moulding juts with its end face into that part of the die cavity (12) provided for the formation of the grip moulding (5),
- in that in the mould, for each grip moulding (5) which is to be produced, a nozzle (33) is present for forcing gas into the injection material located in that part of the die cavity (12) provided for the grip moulding (5), and
- in that the jaw slide (21), which, when the injection mould is closed, bears as part of the projection (18) of the corresponding die jaw (17) upon the core (14), is equipped with an arc-shaped depression (29) for forming the bottom edge (6) of the grip moulding (5), which jaw slide, upon removal of the box (1) from the moulding, initially, when the die jaw (17) is moved in the direction of removal and simultaneously outwards, continues to bear against the core (14) and can be returned axially outwards into its working position in the die jaw (17) only once the grip moulding (5) has departed the depression (29).

2. Injection mould according to Claim 1, characterised in that the nozzle (33) for forcing in the gas is disposed, inclusive of feed line (34), respectively in the jaw slide (21).

## Revendications

1. Outil de moulage par injection pour la fabrication d'un boîtier en matière plastique (1), qui est constitué d'un socle (2) et de 4 parois solidaires (3) agencées en angle droit, sur lequel au moins une des parois présente à son extrémité supérieure une poignée (5) formée par un découpage à l'emportepièce (4) de la paroi, laquelle poignée est constituée de deux parois de part et d'autre d'un espace creux. Cet outil de moulage par injection se compose d'un outil doté d'une buse d'injection inamovible (9) et d'une pièce de fermeture amovible (11), entre lesquels se trouve un espace vide destiné au moulage (12). La partie centrale (14) de cet outil de moulage qui limite le volume de l'espace de moulage et qui est orientée en direction de la buse d'injection (9), est fixée à la partie amovible (11) de l'outil. Les quatre joues latérales (15) de l'outil, orientées à 90° les unes par rapport aux autres, sont fixées à la buse d'injection (9). Ces joues latérales sont orientées vers la pièce de fermeture (11) et entourent la partie centrale (14) avec toutefois un espace intermédiaire. Les surfaces internes des joues latérales faisant face à la partie centrale (14) sont inclinées de manière à ce que la distance entre la surface interne et la partie centrale augmente avec l'éloignement de la buse d'injection (9). Cet outil de moulage est muni sur les surfaces internes des joues latérales (15) inclinées et dotées de glissières de guidage (16), de joues de moulage (17) amovibles et coulissant dans ces glissières, lesquelles joues de moulage constituent, outil fermé, la limite extérieure de l'espace de moulage (12) et possèdent une surface agencée en une saillie (18) débordant dans l'espace de moulage (12) et appliquée contre la partie centrale (14), constituant ainsi une ouverture (4) dans la paroi afférente (3) du boîtier. Cet outil de moulage enfin est muni pour chaque poignée produite, d'un coulisseau (21) mobile par rapport à la joue de moulage et perpendiculaire à l'axe de l'outil. Ce coulisseau est équipé d'éléments de commande et de déplacement qui n'autorisent son mouvement lors du démoulage du boîtier (1) que lorsque le boîtier (1) se trouve désolidarisé de l'outil de moulage. Cet outil de moulage par injection se caractérise par le fait:
- qu'un coulisseau (20) sous-jacent est encastré dans la partie centrale (14) à hauteur de chaque poignée (5) produite, lequel coulisseau est orientable perpendiculairement au mouvement de fermeture des joues de moulage et, lors du moulage par injection, fait saillie avec sa surface frontale, dans la partie de l'espace de moulage (12) prévue pour le moulage de la poignée (5);
- que pour chaque poignée (5) produite, une buse (33) est prévue pour l'injection de gaz dans la matière injectée, laquelle se trouve dans la partie de l'espace de moulage (12) prévue pour la poignée, et que, outil fermé, le coulisseau (21) en tant que partie de la saillie (18) de la joue de moulage afférente (17) et appliqué contre a partie centrale (14) présente une cavité en forme d'arc de cercle (29) destinée à former le bord inférieur (6) de la poignée (5). Lors du démoulage du boîtier (1) par déplacement de la joue de moulage (17) en direction du démoulage et vers l'extérieur, ce coulisseau reste dans une première phase accolé à la partie centrale (14) et ne revient à sa position initiale à l'intérieur de la joue de moulage (17) par translation axiale vers l'extérieur, que lorsque la poignée (5) est sortie de la cavité (29).

2. Outil de moulage par injection conformément à la revendication 1, caractérisé par le fait que la buse d'injection du gaz (33), y compris sa conduite d'alimentation (34), est agencée respectivement à l'interieur du coulisseau (21).
